# EUROPÄISCHE PATENTSCHRIFT

(11) **EP 0 920 656 B1**
(45) Veröffentlichungstag und Bekanntmachung des Hinweises auf die Patenterteilung: **27.10.2004**
(21) Anmeldenummer: 97935427.1
(22) Anmeldetag: 16.07.1997
(51) Int. Cl.: G05B 19/042

(54) **VERFAHREN ZUM SCHUTZ VON SPEICHERPROGRAMMIERTEN STEUERUNGEN VOR EINEM ÜBERSCHREIBEN**
PROCESS FOR THE PROTECTION OF STORED PROGRAM CONTROLS FROM OVERWRITING
PROCEDE POUR PROTEGER DES COMMANDES PAR PROGRAMME ENREGISTRE CONTRE L'ECRASEMENT D'INFORMATIONS

(30) Priorität: 24.08.1996 DE 19634341
(43) Veröffentlichungstag der Anmeldung: 09.06.1999
(73) Patentinhaber: ROBERT BOSCH GMBH, 70442 Stuttgart (DE)
(72) Erfinder: ZIMMERMANN, Jürgen, D-71665 Vaihingen (DE); WAGENER, Martin, D-71254 Ditzingen (DE)
(86) Internationale Anmeldenummer: PCT/DE1997/001495
(87) Internationale Veröffentlichungsnummer: WO 1998/008147

(56) Entgegenhaltungen:
- EP-A- 0 169 913
- EP-A- 0 455 174
- EP-A- 0 587 936

## Beschreibung

### Stand der Technik

Die Erfindung geht aus von einem Verfahren zum Schutz von speicherprogrammierten Steuerungen vor einem Überschreiben nach der Gattung des Hauptanspruchs.

Es sind bereits Verfahren zum Schutz von speicherprogrammierten Steuerungen, die vorzugsweise in Kraftfahrzeugen eingesetzt werden, bekannt. Die EP 455 174 A2 beschreibt ein Programmierverfahren bei dem das entsprechende Programm in einem einzigen Block gespeichert ist. Wenn nun das Programm in eine beliebige Stelle der in der Figur derEp 455 174 dargestellten Stufe V springt, so kann unbeabsichtigt eine Programmierung erfolgen. In der DE 43 44 866 wird ein Steuergerät, insbesondere ein Kraftfahrzeugsteuergerät, über ein externes Programmiergerät programmiert, wobei zur Verhinderung einer ungewollten Programmierung eine Abfrage des Steuergerätes an das externe Programmiergerät erfolgen muß. Die Abfrage erfolgt durch ein Mittel, das das Signal für die Freigabe der Programmierung dann erkennen kann, wenn das externe Programmiergerät mit seiner seriellen Übertragungsleitung an das Steuergerät angeschlossen ist. Die Programmierung des Steuergerätes erfolgt nach dieser Sicherheitsabfrage in den programmierbaren, nicht flüchtigen Speicher des Steuergerätes über die serielle Schnittstelle. Dieses bekannte Verfahren stellt einen reinen Hardware-Programmierschutz dar. Der reine Hardware-Schutz der programmierbaren Speicher setzt den Einsatz verschiedener elektronischer Bauteile im Steuergerät voraus, die das hardwaremäßige Anschließen der Datenübertragungsleitung erkennen können. Dies bedeutet einen baulichen Mehraufwand für das Steuergerät.

Es sind auch bereits einfache Softwaresicherungen bekannt, die im allgemeinen vom Programmiergerät, dem Tester, aufgerufen werden. Bei reinen Software-Absicherungen besteht immer die Gefahr, daß durch ein Verspringen in der Programmroutine die Freigabe für die Programmierung fälschlicherweise erteilt wird.

### Vorteile der Erfindung

Das erfindungsgemäße Verfahren mit den kennzeichnenden Merkmalen des Hauptanspruchs hat dem gegenüber den Vorteil, daß keine ungewollte Programmierung des Programmspeichers erfolgen kann, da die Programmierroutine zusätzliche Sicherheitsabfragen enthält, die vor der Abarbeitung jedes Programmierabschnitts eine Freigabe prüfen. Besonders vorteilhaft ist es, die Programmierroutine, die im Steuergerät abgelegt ist, in Form von Modulen zu strukturieren. Dadurch ist keine unbeabsichtigte Löschung und Speicherung neuer Daten in den programmierbaren Speicher mehr möglich, da das Programm auch nicht durch einen unbeabsichtigten Einsprung an eine beliebige Position aktiviert werden kann.

Durch die in den Unteransprüchen aufgeführten Maßnahmen sind vorteilhafte Weiterbildungen und Verbesserungen des im Hauptanspruch angegebenen Verfahrens möglich.

Es ist auch von Vorteil, die Programmierroutine aus Befehlsequenzen zusammenzusetzen. Bei der Abarbeitung der Befehlssequenz wird ebenfalls nach jedem Befehl die Freigabe überprüft.
Dabei ist es von Vorteil, Freigabeflags in einem RAM-Speicher abzulegen. Vorteilhafterweise wird die Freigabe nicht nur durch ein einmaliges Abspeichern, sondern durch ein mehrmaliges Abspeichern der Freigabeflags im RAM redundant vorgenommen, und die weitere Programmierung kann nur nach Überprüfung mehrerer Freigabeflags erfolgen.

Eine weitere vorteilhafte Ausbildung stellt eine Abspeicherung der Freigabe in Form von bestimmten RAM-Adresseninhalten dar, wobei die Programmierroutine die Adressen auf ihren Inhalt überprüft. Weiterhin ist es möglich, die Freigabe als eine Kombination von Registern und vom Programmiergerät übertragenen Daten zu erzeugen.

Weiterhin ist es vorteilhaft, für die Freigabe der Programmierroutine durch das externe Programmiergerät Signale zu senden, die zu einem Setzen von Flags in der Programmierroutine führen.
Diese Freigabe kann vom externen Programmiergerät als einmalige Übergabe der Freigabesignale realisiert werden, so daß während der Programmierung auf die Freigaben in einem Speicher zugegeriffen wird.
Es ist allerdings auch eine Variante von Vorteil, die die Freigabe zwischen den Programmabschnitten vom Programmiergerät abfragt.

### Zeichnung

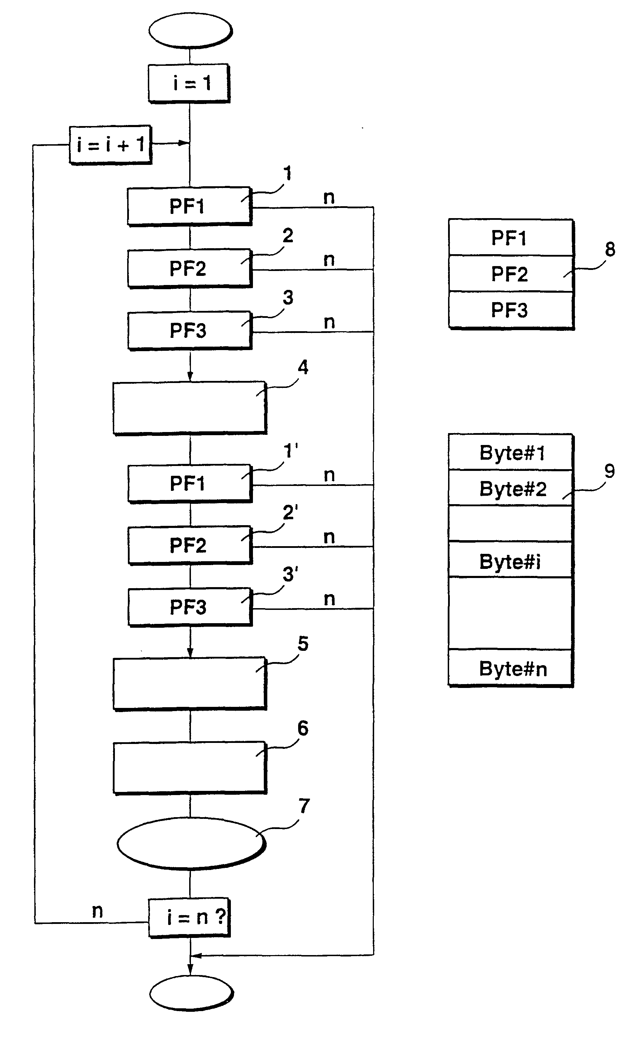

Ein Ausführungsbeispiel der Erfindung ist in der Zeichnung dargestellt und in der nachfolgenden Beschreibung näher erläutert. Es zeigt Figur 1 einen Programmiervorgang nach dem erfindungsgemäßen Verfahren.

### Beschreibung des Ausführungsbeispiels

Ein Steuergerät, das nach dem erfindungsgemäßen Verfahren vor einem Überschreiben seines Programmspeichers durch Softwareschutz geschützt wird, kann ein Brems-, Motor- oder Getriebesteuergerät sein. Üblicherweise ist ein derartiges Steuergerät über einen Diagnoseanschluß an ein externes Programmiergerät anschließbar. Die Steuergeräte werden in der Produktion in das Kraftfahrzeug eingebaut, wobei das Programmieren der Steuergeräte am Bandende oder in der Werkstatt erfolgt. Das Steuergerät enthält einen Mikroprozessor, auf dem integriert oder separat ein nicht flüchtiger, programmierbarer Speicher vorgesehen ist. Der nicht flüchtige Speicher ist insbesondere als Flash-EPROM ausgeführt. Zur Programmierung des nicht flüchtigen Speichers muß ein Freigabesignal an den Speicher angelegt werden. Die Programmierroutine ist ein internes Steuergerätprogramm, das die Programmierung des nicht flüchtigen Speichers ermöglicht. Diese Programmierroutine ist im ROM oder RAM des Prozessors des Steuergeräts abgelegt. Um die Programmierung auszulösen, wird von dem externen Programmiergerät, dem Tester, ein Signal an das Steuergerät gegeben. Das Steuergerät erkennt das Signal und die Programmierroutine setzt das Freigabeflag. Dieses Freigabeflag wird im RAM abgelegt.

In einem ersten Ausführungsbeispiel wird davon ausgegangen, daß die Programmierung des nichtflüchtigen Speichers nicht direkt aus dem Programmspeicher des Prozessors heraus durchgeführt werden kann, in dem die Programmierroutine abgelegt ist. Die Programmierroutine muß also zunächst in den ausführbaren Speicher geladen werden, z. B. aus dem Flash in das X-RAM. Die Programmierroutine wird dazu in mindestens zwei Module zerlegt, die jede für sich keine Programmierung des nichtflüchtigen Speichers auslösen kann. Nachdem das erste Modul geladen wurde, wird erfindungsgemäß noch einmal die Programmierfreigabe abgefragt, bevor das nächste Modul geladen wird.

In einem weiteren Beispiel wird davon ausgegangen, daß eine bestimmte Befehlssequenz geschrieben werden muß, um den Speicher zu programmieren. Erfindungsgemäß werden nun innerhalb der Programmiersequenz Abfragen eingefügt, die überprüfen, ob eine Programmierfreigabe vorliegt. Falls nicht, wird die Programmierung abgebrochen. Dadurch kann ein ungewollter Einsprung an beliebiger Stelle des Programms in keinem Fall eine Programmierung des Speichers zur Folge haben. Die Programmierfreigabe wird vom Tester ausgelöst und vom Prozessor des Steuergerätes erkannt. Das Programm erteilt die Freigabe und setzt das Freigabeflag, das im RAM abgelegt wird. Es ist daher notwendig, Zusatzmaßnahmen zu treffen, daß diese Programmierfreigabe nicht ungewollt, z. B. durch eine Ablaufstörung im Programm, im RAM eingetragen wird. Dies hätte zur Folge, daß eine ungewollte Programmierung trotz der Zwischenprüfung durchgeführt werden könnte. Als Zusatzmaßnahme finden folgende Schritte Anwendung:
1. Die Programmierfreigabe wird mehrfach redundant im RAM abgelegt. Dadurch wird verhindert, daß eine Freigabe durch ein ungewolltes einfaches Beschreiben des RAM mit einem Freigabeflag erfolgen kann.
2. Die Abspeicherung der Programmierfreigabe erfolgt nicht explizit in einem Programmmodul. Die Programmierfreigabe wird vielmehr implizit durch eine Prüfung des Inhalts bestimmter RAM-Adressen erkannt, wobei die Adressen von außerhalb beschrieben werden, z. B. durch den Tester, d. h. an keiner Stelle durch das Programm selbst.
3. Adressen und/oder Inhalte, die Bestandteile der Programmiersequenz sind, werden selbst erst durch Kombination von Adressen von vom Tester übertragenen Daten erzeugt.

In Figur 1 wird in einem Ausführungsbeispiel ein Programmierprozeß dargestellt. Das Ausführungsbeispiel zeigt den Programmiervorgang von Byte 1 bis n, die vom Tester in den nicht flüchtigen Speicher programmiert werden sollen. Der Speicher ist so konzipiert, daß er ein Byte #i genau dann programmiert, wenn zu ihm Freigabebyte #1, Freigabebyte #2, Adresse Byte #i und Inhalt von Byte #i korrekt und in dieser Reihenfolge übertragen werden. Als Beginn dieses Vorgangs wird vom Tester die Anforderung zur Programmierung an das Steuergerät gesandt. Anschließend sendet der Tester PF1 bis PF3 im Programmfreigabeblock 8 an das Steuergerät, in dem sie als Freigabeflags PF1 bis PF3 im RAM abgelegt werden. Daran anschließend werden die zu programmierenden Byte #i bis Byte #n im Programmblock 9 vom Tester übertragen und im RAM zwischengespeichert. Zur Programmierung eines Byte #i wird zunächst nach dem erfindungsgemäßen Verfahren die Freigabe überprüft. Die Programmierroutine prüft, ob die Freigabeflags PF1 bis PF3 1,2,3 korrekt sind. Ist dies der Fall, wird das Freigabebyte #1 zum EPROM übertragen 4. Anschließend wird eine nochmalige Abfrage 1',2',3'nach den Programmfreigabeflags PF1 bis PF3 durchgeführt. Bei erfolgreicher Prüfung wird das zweite Freigabebyte #2 übertragen 5. Anschließend werden Adresse und Inhalt von Byte #i übertragen. Dies hat die Programmierung von Byte #i zur Folge 7. Von diesem Punkt aus geht die Programmierroutine wieder zum Ausgangspunkt, um die nächsten Informationen von Byte #i+1 zu übertragen. Jedesmal erfolgt zuvor die Prüfung der Freigabeflags und das anschließende Schreiben der Freigabebytes #1 bzw #2.

## Patentansprüche

1. Verfahren zum Schutz von speicherprogrammierbaren Steuerungen, insbesondere im Kraftfahrzeug, vor einem ungewollten Überschreiben eines nichtflüchtigen, programmierbaren Speichers des Steuergerätes, wobei das Steuergerät eine Programmierroutine, die die Ausführung des Überschreibevorgangs steuert, in einem Speicher enthält, **dadurch gekennzeichnet, dass** die Programmierroutine in mindestens zwei Module (1, 2, 3, 1', 2', 3', 4, 5, 6, 7) zerlegt ist, die jeweils für sich keine Programmierung des nichtflüchtigen Speichers auslösen können, dass jedem Modul eine Programmierfreigabe zugeordnet ist, und dass die Module (1, 2, 3, 1', 2', 3', 4, 5, 6, 7) nach erfolgreicher Überprüfung der zugehörigen Programmierfreigaben nacheinander abgearbeitet werden.

2. Verfahren zum Schutz von speicherprogrammierbaren Steuerungen nach Anspruch 1, **dadurch gekennzeichnet, daß** die Programmierroutine aus einer Befehlssequenz besteht, wobei nach jedem Befehl Programmierfreigabe-Abfrage und Freigabe erfolgen.

3. Verfahren zum Schutz von speicherprogrammierbaren Steuerungen nach Anspruch 1 oder 2, **dadurch gekennzeichnet, daß** die Freigabe n-fach im RAM abgelegt wird und eine Programmierung nach der Überprüfung von n Freigaben im Speicher möglich ist.

4. Verfahren zum Schutz von speicherprogrammierbaren Steuerungen nach Anspruch 1 bis 3, **dadurch gekennzeichnet, daß** die Freigabe durch das Überprüfen bestimmter Adressen im RAM erfolgt.

5. Verfahren zum Schutz von speicherprogrammierbaren Steuerungen nach Anspruch 1 bis 4, **dadurch gekennzeichnet, daß** die Freigabe durch vom Tester übertragene Daten und/oder Adressen erzeugt wird.

6. Verfahren zum Schutz von speicherprogrammierbaren Steuerungen nach Anspruch 1 bis 5, **dadurch gekennzeichnet, daß** die Programmierfreigabe-Abfrage an ein externes Programmiergerät erfolgt, das jeweils die Freigabe nach einem Abschnitt der Programmierroutine erteilt.

7. Verfahren zum Schutz von speicherprogrammierbaren Steuerungen nach Anspruch 1 bis 6, **dadurch gekennzeichnet, dass** das externe Programmiergerät die Freigabe durch Übersenden von Freigabebyte (8) erteilt.

## Claims

1. Method for protecting programmable logic controllers, particularly in the motor vehicle, against unintentional overwriting of a non-volatile, programmable memory in the control unit, where the control unit contains a programming routine, which controls execution of the overwriting operation, in a memory, **characterized in that** the programming routine is split into at least two modules (1, 2, 3, 1', 2', 3', 4, 5, 6, 7) which are each unable to initiate programming of the non-volatile memory independently, **in that** each module has an associated programming enable, and **in that** the modules (1, 2, 3, 1', 2', 3', 4, 5, 6, 7) are processed in succession following successful checking of the associated programming enables.

2. Method for protecting programmable logic controllers according to Claim 1, **characterized in that** the programming routine comprises a command sequence, where each command is followed by the occurrence of programming-enable query and enabling.

3. Method for protecting programmable logic controllers according to Claim 1 or 2, **characterized in that** the enable is stored n times in the RAM, and programming is possible after the checking of n enables in the memory.

4. Method for protecting programmable logic controllers according to Claims 1 to 3, **characterized in that** enabling is effected by checking particular addresses in the RAM.

5. Method for protecting programmable logic controllers according to Claims 1 to 4, **characterized in that** the enable is generated by data and/or addresses transmitted by the tester.

6. Method for protecting programmable logic controllers according to Claims 1 to 5, **characterized in that** the programming-enable query is sent to an external programming unit which respectively grants enabling after a portion of the programming routine.

7. Method for protecting programmable logic controllers according to Claims 1 to 6, **characterized in that** the external programming unit grants enabling by transfer of enable byte (8).

## Revendications

1. Procédé pour protéger des commandes par programme enregistré, en particulier dans le véhicule automobile, d'un écrasement involontaire d'une mémoire programmable non volatile de l'appareil de commande, l'appareil de commande contenant dans une mémoire une routine de programmation qui pilote l'exécution du processus de réécriture,
**caractérisé en ce que**
la routine de programmation est décomposée en au moins deux modules (1, 2, 3, 1', 2', 3', 4, 5, 6, 7) qui chacun en eux-mêmes ne peuvent pas déclencher une programmation de la mémoire non volatile, à chaque module une autorisation de programmation est associée et les modules (1, 2, 3, 1', 2', 3', 4, 5, 6, 7 ) sont traités l'un après l'autre après vérification positive des autorisations de programmation correspondantes.

2. Procédé pour protéger des commandes par programme enregistré selon la revendication 1,
**caractérisé en ce que**
la routine de programmation consiste en une séquence d'instructions, en effectuant après chaque instruction, une demande d'autorisation de programmation et une autorisation.

3. Procédé pour protéger des commandes par programme enregistré selon la revendication 1 ou 2,
**caractérisé en ce que**
l'autorisation est déposée n fois dans la RAM et une programmation est possible après la vérification de n autorisations dans la mémoire.

4. Procédé pour protéger des commandes par programme enregistré selon l'une quelconque des revendications 1 à 3,
**caractérisé en ce que**
l'autorisation s'effectue par la vérification de certaines adresses dans la RAM.

5. Procédé pour protéger des commandes par programme enregistré selon l'une quelconque des revendications 1 à 4,
**caractérisé en ce que**
l'autorisation est générée par des données et/ou adresses transmises par le testeur.

6. Procédé pour protéger des commandes par programme enregistré selon l'une quelconque des revendications 1 à 5,
**caractérisé en ce que**
la demande d'autorisation de programmation s'effectue sur un appareil externe de programmation qui donne à chaque fois l'autorisation après une section de la routine de programmation.

7. Procédé pour protéger des commandes par programme enregistré selon l'une quelconque des revendications 1 à 6,
**caractérisé en ce que**
l'appareil de programmation externe donne l'autorisation par transmission d'octets d'autorisation (8).
